# EUROPEAN PATENT SPECIFICATION

(11) **EP 4 250 492 B1**
(45) Date of publication and mention of the grant of the patent: **24.06.2026**
(21) Application number: 23163711.7
(22) Date of filing: 23.03.2023
(51) Int. Cl.: H01R 4/02, H01R 4/58, H01R 4/70, H01R 11/01, H01R 4/72, H01R 13/405

(54) **ELECTRICAL CONNECTION ASSEMBLY AND CONNECTOR**
ELEKTRISCHE VERBINDUNGSANORDNUNG UND VERBINDER
ENSEMBLE DE CONNEXION ÉLECTRIQUE ET CONNECTEUR

(30) Priority: 25.03.2022 CN 202220673395 U
(43) Date of publication of application: 27.09.2023
(73) Proprietor: Tyco Electronics (Shanghai) Co., Ltd., Pilot Free Trade Zone Shanghai 200131 (CN)
(72) Inventor: Yang, Yuchen, Shanghai (CN); Zhou, Xiao, Shanghai (CN); Li, Ziwei, Shanghai (CN); Jiang, Kaixuan, Shanghai (CN)
(74) Representative: Grünecker Patent- und Rechtsanwälte PartG mbB

(56) References cited:
- CN-B- 108 281 225
- JP-A- 2021 125 310
- US-A- 3 466 745
- US-A1- 2008 128 153
- US-A1- 2019 168 694
- US-B2- 10 381 752

## Description

### CROSS-REFERENCE TO RELATED APPLICATION

This application claims the benefit of Chinese Patent Application No. CN 202220673395.1 filed on March 25, 2022 in the State Intellectual Property Office of China.

### BACKGROUND OF THE INVENTION

### Field of the Invention

The present invention relates to an electrical connection assembly for a connector, an electrical connection component for a connector and a connector including the electrical connection assembly.

### Description of the Related Art

In the prior art, the high-voltage connector usually comprises a housing, a pair of terminals and a pair of flat conductors. The pair of terminals are usually installed side by side in the housing. The pair of flat conductors are also arranged side by side and electrically connected to the pair of terminals.

An example in the prior art is provided by the multi-layered electrical flat strip conductor for an electrical cable according to US 2008/0128153 A1 in which the flat strip conductor and further conductors are arranged one above the other, while being insulated in the outward direction.

According to CN 108281225 B another wiring component structure in the art is provided that comprises a laminated flat conductor and an insulating layer provided around the flat conductor. The laminated flat conductor further includes a plurality of flat conductors being stacked on each other in the thickness direction of the laminated flat conductor and an insulating plate member sandwiched inbetween.

Further examples of relevant prior art include JP2021125310A, which discloses a connection structure for flat conductors in which exposed conductor portions are electrically connected and covered by a protective layer.

In the prior art, because the pair of flat conductors are arranged side by side, the width of the flat conductor will be limited. The width of the flat conductor is usually equal to the width of the terminal, which seriously affects the current-carrying capacity of the flat conductor.

### SUMMARY OF THE INVENTION

The present invention has been made to overcome or alleviate at least one aspect of the above mentioned disadvantages.

The invention is set out in the appended set of claims. According to the present invention, there is provided an electrical connection assembly for a connector. The electrical connection assembly comprises of: a pair of flat conductors which are arranged to overlap each other in the thickness direction thereof, wherein the flat conductor comprises a flat conductor core and an insulation layer cladded on the flat conductor core, and the flat conductor core has an electrical connection part exposed from one end of the insulation layer for electrical connection; a pair of connection terminals which are respectively connected to two surfaces facing each other of the electrical connection parts of the pair of flat conductor cores; and a cladding layer which is cladded on the electrical connection part and the connection terminal, so that the connection between the electrical connection part and the connection terminal is sealed in the cladding layer. The electrical connection part of the flat conductor core comprises of: a connection end which is offset to one side of the width direction of the flat conductor; and a connection base which is connected between the connection end and the body of the flat conductor core, wherein the connection ends of the pair of flat conductor cores of the pair of flat conductors are spaced with a first spacing in the width direction.

According to an exemplary embodiment of the present invention, the connection bases of the pair of flat conductor cores of the pair of flat conductors are partially overlapped with each other in the thickness direction.

According to another exemplary embodiment of the present invention, the connection bases of the pair of flat conductor cores are separated from each other by a second spacing in the thickness direction.

According to another exemplary embodiment of the present invention, the connection base of the flat conductor core is offset to one side of the thickness direction of the flat conductor, and the connection bases of the pair of flat conductor cores are offset away from each other to increase the second spacing.

According to another exemplary embodiment of the present invention, the connection base comprises two opposite sides in the width direction, and at least part of at least one side of the connection base extends obliquely with respect to the length direction of the flat conductor, so that the width of at least part of the connection base gradually increases in a direction away from the connection end.

According to another exemplary embodiment of the present invention, the connection end has a first width, the body of the flat conductor core has a second width, and the first width is less than half of the second width; the width of at least one part of the connection base is changed from the first width to the second width.

According to another exemplary embodiment of the present invention, the connection end comprises two opposite sides in the width direction, and the two opposite sides of the connection end extend along the length direction of the flat conductor.

According to another exemplary embodiment of the present invention, each of the connection end and the connection base has two opposite surfaces in the thickness direction, and the two surfaces of the connection end are flush with the two surfaces of the connection base.

According to another exemplary embodiment of the present invention, the connection ends of the pair of flat conductor cores are separated from each other by a first spacing in the width direction, and the pair of connection terminals are separated from each other in the width direction; the connection terminal comprises a first part connected to the connection end of the flat conductor core, at least a part of the first parts of the pair of connection terminals are separated in the width direction by a distance equal to the first distance.

According to another exemplary embodiment of the present invention, the first part of the connection terminal is also connected to the surface of the connection base of the flat conductor core to increase the electrical connection area between the connection terminal and the electrical connection part of the flat conductor core.

According to another exemplary embodiment of the present invention, the connection ends of the pair of flat conductor cores are separated from each other by a second spacing in the thickness direction, and the second spacing is greater than the thickness of the connection terminal; the first part of one connection terminal electrically connected to one flat conductor core is separated from the other flat conductor core by a predetermined distance in the thickness direction.

According to another exemplary embodiment of the present invention, the first part of the connection terminal is welded, riveted or crimped to the electrical connection part of the flat conductor core.

According to another exemplary embodiment of the present invention, the connection terminal also includes a second part extending beyond the electrical connection part of the flat conductor core, the second part is used for electrical connection with a mating connection terminal.

According to another exemplary embodiment of the present invention, the electrical connection assembly further comprises a pair of connection barrels which are respectively connected to the second parts of the pair of connection terminals. The pair of connection barrels are located outside the cladding layer and are used for electrical connection with two mating connection terminals respectively.

According to another exemplary embodiment of the present invention, a riveting hole is formed on the second part of the connection terminal, the connection barrel comprises a riveting part riveted to the riveting hole and a convex part protruding from the riveting hole, the top surface of the convex part is used for electrical contact with the mating connection terminal.

According to another exemplary embodiment of the present invention, the second part of the connection terminal is offset to one side of the thickness direction of the first part, and the second parts of the pair of connection terminals are offset close to each other.

According to another exemplary embodiment of the present invention, the second part of the connection terminal has a first surface and a second surface opposite to each other in the thickness direction; one of the pair of connection barrels is riveted to the first surface of the second part of one connection terminal, and the other is riveted to the second surface of the second part of the other connection terminal.

According to another exemplary embodiment of the present invention, the second part of the connection terminal has two opposite surfaces in the thickness direction, the two surfaces of the second part of one connection terminal are flush with the two surfaces of the second part of the other connection terminal; the top surfaces of the convex parts of the pair of connection barrels are located in the same plane perpendicular to the thickness direction.

According to another exemplary embodiment of the present invention, the connection terminal and the connection barrel are made of copper, and the flat conductor core is made of aluminum.

According to another exemplary embodiment of the present invention, the connection barrel is integrally formed on the second part of the connection terminal.

According to another exemplary embodiment of the present invention, the pair of flat conductors are identical and interchangeable with each other; and/or the pair of connection terminals are identical and interchangeable with each other; and/or the pair of connection barrels are identical and interchangeable with each other.

According to another exemplary embodiment of the present invention, the cladding layer is made of elastic material, and a part of the cladding layer is cladded on the insulation layer of the pair of flat conductors; a sealing structure suitable for matching with an inner wall of a connector housing is formed on the outer surface of the part of the cladding layer, the sealing structure is used to seal a gap between the insulation layers of the pair of flat conductors and the inner wall of the connector housing.

According to another exemplary embodiment of the present invention, the sealing structure comprises a plurality of annular ribs formed on the outer surface of the part of the cladding layer, and the plurality of annular ribs are separated from each other in the length direction of the flat conductor.

According to another exemplary embodiment of the present invention, the cladding layer is an integrated injection molding part formed on the electrical connection part and the connection terminal by inserting injection molding.

According to another aspect of the present invention, there is provided an electrical connection component for a connector. The electrical connection component comprises of: a flat conductor core; and an insulation layer cladded on the flat conductor core. The flat conductor core has a body and an electrical connection part exposed from one end of the insulation layer, the electrical connection part includes a connection base and a connection end, the connection base is connected between the connection end and the body of the flat conductor core, and the connection end is offset to one side of the width direction of the body of the flat conductor core.

According to an exemplary embodiment of the present invention, the flat conductor core is a bus bar.

According to another exemplary embodiment of the present invention, the flat conductor core is a profile molding part.

According to another aspect of the present invention, there is provided a connector. The connector comprises of: a housing; and the above electrical connection assembly installed in the housing.

In the aforementioned exemplary embodiments according to the present invention, the pair of flat conductors are arranged to overlap each other in the thickness direction, so the width of the flat conductor can be increased and the current-carrying capacity of the flat conductor can be improved.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of an electrical connection assembly for a connector according to an exemplary embodiment of the present invention;
Figure 2 shows an illustrative exploded view of the electrical connection assembly shown in Figure 1;
Figure 3 shows an illustrative perspective view of a pair of flat conductors of the electrical connection assembly shown in Figure 2;
Figure 4 shows an illustrative perspective view of a pair of connection terminals and a pair of connection barrels of the electrical connection assembly shown in Figure 2;
Figure 5 shows an illustrative assembly view of a flat conductor, a connection terminal and a connection barrel of the electrical connection assembly shown in Figure 1;
Figure 6 shows an illustrative exploded view of a flat conductor, a connection terminal and a connection barrel of the electrical connection assembly shown in Figure 1;
Figure 7 shows a side view of a pair of flat conductors of the electrical connection assembly shown in Figure 2;
Figure 8 shows a top view of a pair of flat conductors of the electrical connection assembly shown in Figure 2;
Figure 9 shows a side view of the electrical connection assembly shown in Figure 2, where only the upper connection terminal is shown;
Figure 10 shows a side view of the electrical connection assembly shown in Figure 2, where only the lower connection terminal is shown;
Figure 11 shows a side view of the electrical connection assembly shown in Figure 2;
Figure 12 shows an illustrative perspective view of an electrical connection assembly for a connector according to another exemplary embodiment of the present invention;
Figure 13 shows a longitudinal sectional view of the electrical connection assembly shown in Figure 12;
Figure 14 shows an illustrative perspective view of an electrical connection assembly for a connector according to another exemplary embodiment of the present invention;
Figure 15 shows an illustrative exploded view of a flat conductor and a connection barrel of the electrical connection assembly shown in Figure 14; and
Figure 16 shows a cladding layer formed on one end of the flat conductor of the electrical connection assembly shown in Figure 14.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an electrical connection assembly for a connector. The electrical connection assembly comprises of: a pair of flat conductors which are arranged to overlap each other in the thickness direction thereof, wherein the flat conductor comprises a flat conductor core and an insulation layer cladded on the flat conductor core, and the flat conductor core has an electrical connection part exposed from one end of the insulation layer for electrical connection; a pair of connection terminals which are respectively connected to two surfaces facing each other of the electrical connection parts of the pair of flat conductor cores; and a cladding layer which is cladded on the electrical connection part and the connection terminal, so that the connection between the electrical connection part and the connection terminal is sealed in the cladding layer.

According to another general concept of the present invention, there is provided an electrical connection component for a connector. The electrical connection component comprises of: a flat conductor core; and an insulation layer cladded on the flat conductor core. The flat conductor core has a body and an electrical connection part exposed from one end of the insulation layer, the electrical connection part includes a connection base and a connection end, the connection base is connected between the connection end and the body of the flat conductor core, and the connection end is offset to one side of the width direction of the body of the flat conductor core.

According to another general concept of the present invention, there is provided a connector. The connector comprises of: a housing; and the above electrical connection assembly installed in the housing.

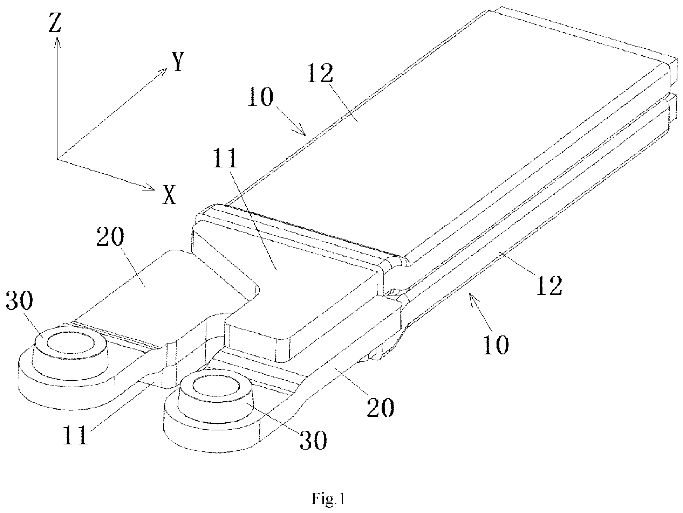

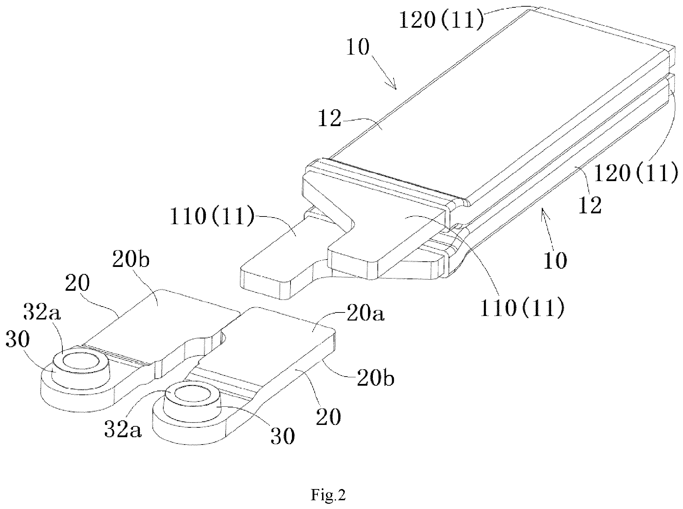

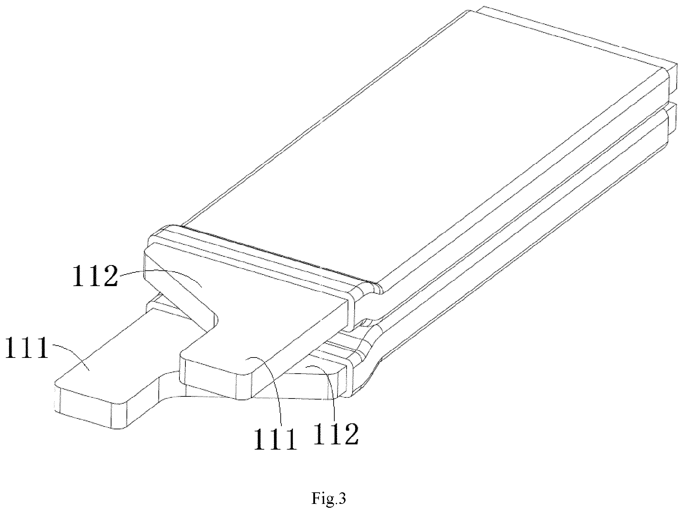

Figure 1 shows an illustrative perspective view of an electrical connection assembly for a connector according to an exemplary embodiment of the present invention; Figure 2 shows an illustrative exploded view of the electrical connection assembly shown in Figure 1; Figure 3 shows an illustrative perspective view of a pair of flat conductors 10 of the electrical connection assembly shown in Figure 2.

As shown in Figures 1 to 3, in the illustrated embodiment, the electrical connection assembly for the connector includes a pair of flat conductors 10. The pair of flat conductors 10 are arranged to overlap each other in a thickness direction Z. In other words, the projections of the pair of flat conductors 10 in the thickness direction Z overlap each other. For example, in an exemplary embodiment of the present invention, the pair of flat conductors 10 can be stacked up and down. In this way, the width of the flat conductor 10 can be increased to improve the current carrying capacity of the flat conductor 10.

As shown in Figures 1 to 3, in the illustrated embodiment, the flat conductor 10 comprises a flat conductor core 11 and an insulation layer 12 cladded on the flat conductor core 11. The flat conductor core 11 has an electrical connection part 110 for electrical connection that is exposed from one end of the insulation layer 12. In an exemplary embodiment of the present invention, for example, the aforementioned electrical connection part 110 can be formed by cutting and bending the flat conductor core 11 exposed from the insulation layer 12.

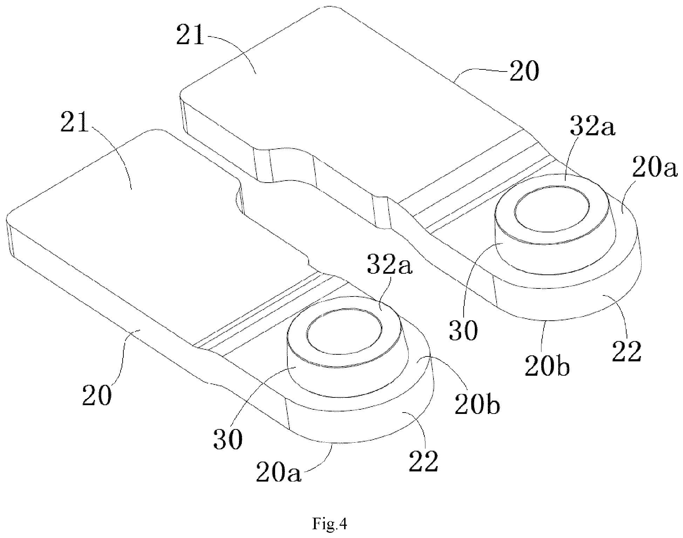

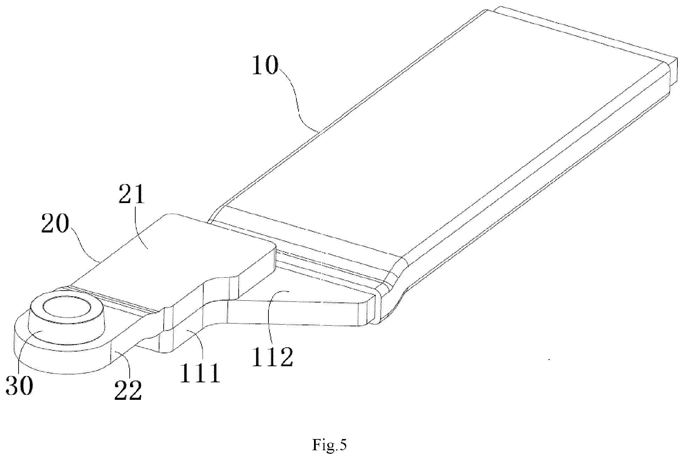

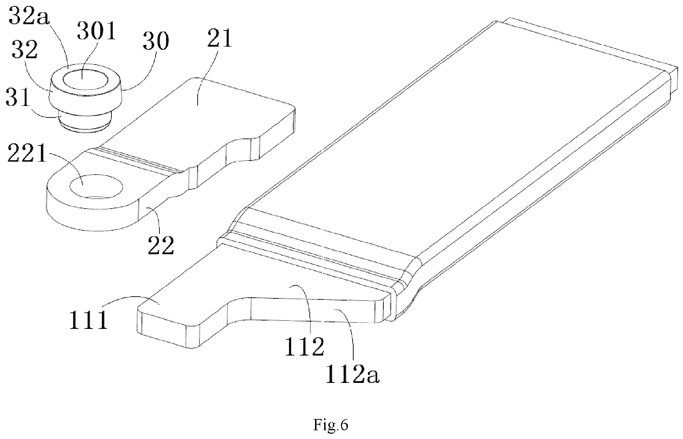

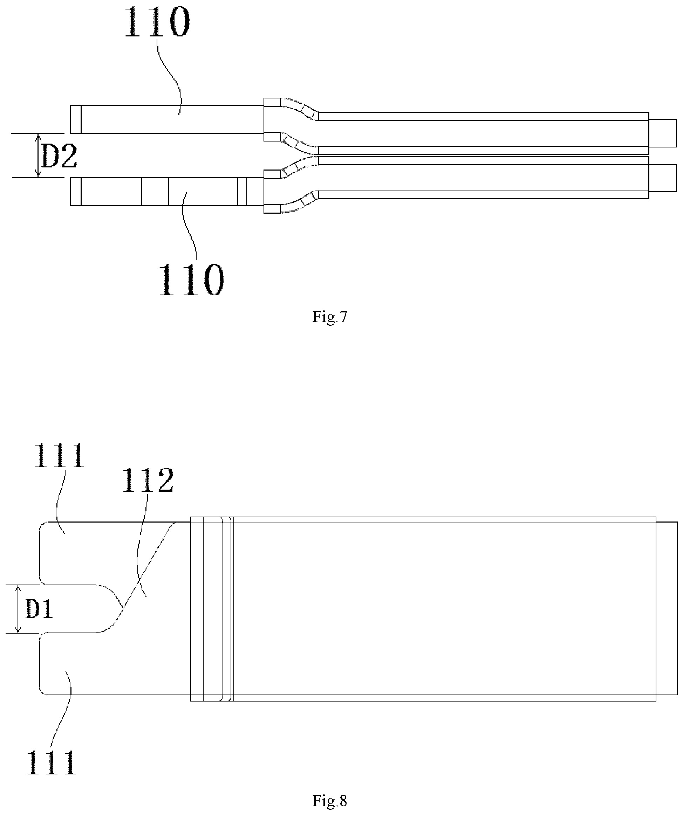

Figure 4 shows an illustrative perspective view of a pair of connection terminals 20 and a pair of connection barrels 30 of the electrical connection assembly shown in Figure 2; Figure 5 shows the assembly view of a flat conductor 10, a connection terminal 20 and a connection barrel 30 of the electrical connection assembly shown in Figure 1; Figure 6 shows an illustrative exploded view of a flat conductor 10, a connection terminal 20 and a connection barrel 30 of the electrical connection assembly shown in Figure 1; Figure 7 shows a side view of a pair of flat conductors 10 of the electrical connection assembly shown in Figure 2; Figure 8 shows a top view of a pair of flat conductors 10 of the electrical connection assembly shown in Figure 2.

As shown in Figures 1 to 8, in the illustrated embodiment, the electrical connection part 110 of the flat conductor core 11 includes a connection end 111 and a connection base 112. The connection end 111 is offset to one side of the width direction X of the flat conductor 10. The connection base 112 is connected with the connection end 111 and is located between one end of the insulation layer 12 and the connection end 111. The connection base 112 is connected between the connection end 111 and the body 120 of the flat conductor core 11.

As shown in Figures 1 to 8, in the illustrated embodiment, the connection ends 111 of the pair of flat conductor cores 11 of the pair of flat conductors 10 are separated from each other by a first spacing D1 in the width direction X.

As shown in Figures 1 to 8, in the illustrated embodiment, the connection bases 112 of the pair of flat conductor cores 11 of the pair of flat conductors 10 partially overlap each other in the thickness direction Z. That is to say, the projections of the connection bases 112 of the pair of flat conductor cores 11 in the thickness direction Z partially overlap each other.

As shown in Figures 1 to 8, in the illustrated embodiment, the connection bases 112 of the pair of flat conductor cores 11 are separated from each other by a second spacing D2 in the thickness direction Z. In the illustrated embodiment, the connection base 112 of the flat conductor core 11 is offset to one side of the thickness direction Z of the flat conductor 10, and the connection bases 112 of the pair of flat conductor cores 11 are offset away from each other to increase the second spacing D2.

As shown in Figures 1 to 8, in the illustrated embodiment, the connection base 112 includes two opposite sides in the width direction X, and at least a part of at least one side 112a of connection base 112 is inclined to extend with respect to the length direction Y of the flat conductor 10, so that the width of at least a part of the connection base 112 gradually increases in a direction away from the connection end 111. That is to say, the width of at least a part of the connection base 112 gradually increases in the direction towards the body 120 of the flat conductor core 11.

As shown in Figures 1 to 8, in the illustrated embodiment, the connection end 111 includes two opposite sides in the width direction X, and the two sides of the connection end 111 extend along the length direction Y of the flat conductor 10. In the illustrated embodiment, the width of the connection end 111 is less than half of the width of the body 120 of the flat conductor core 11. In the illustrated embodiment, the connection end 111 has a first width, and the body 120 of the flat conductor core 11 has a second width, the width of at least a part of the connection base 112 changes from the first width to the second width. As shown in Figures 1 to 8, in the illustrated embodiment, the connection end 111 and the connection base 112 are flush with each other in the thickness direction Z. In other words, the two opposite surfaces of the connection end 111 in the thickness direction Z are flush with the two opposite surfaces of the connection base 112 in the thickness direction Z. Therefore, in the illustrated embodiment, the spacing of the connection ends 111 of the pair of flat conductor cores 11 in the thickness direction Z is equal to the aforementioned second spacing D2.

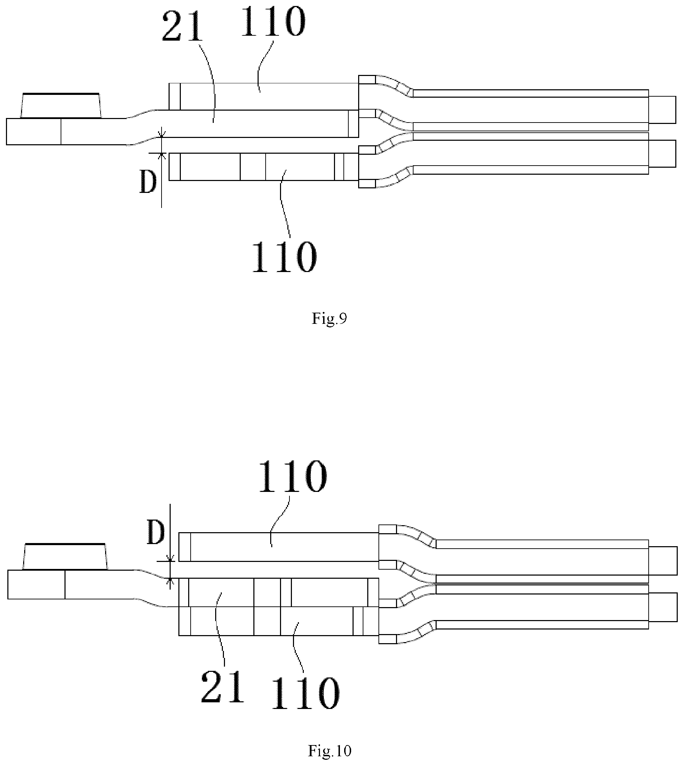

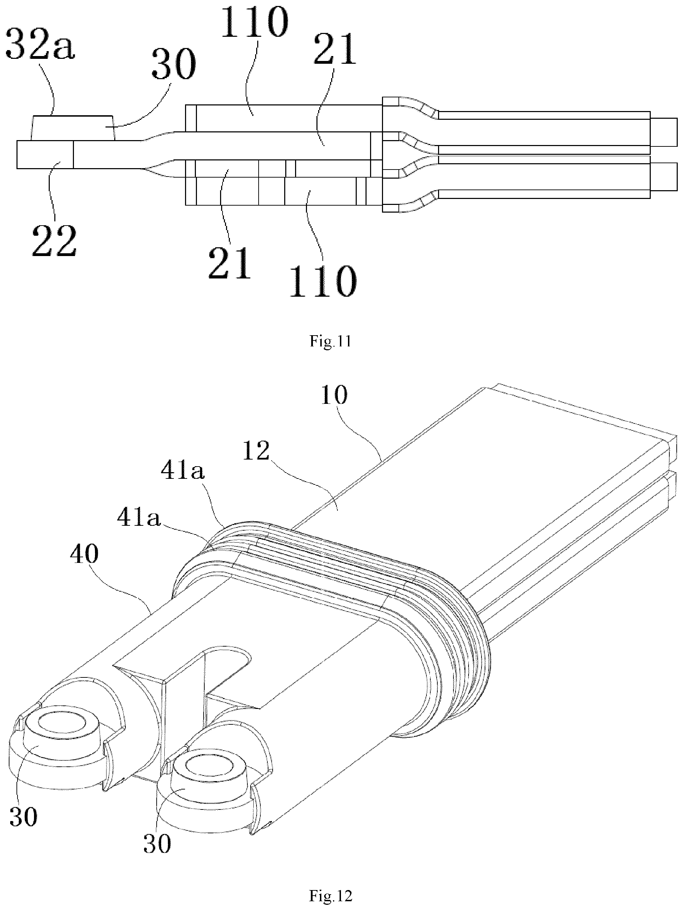

Figure 9 shows a side view of the electrical connection assembly shown in Figure 2, where only the upper connection terminal 20 is shown; Figure 10 shows a side view of the electrical connection assembly shown in Figure 2, in which only the lower connection terminal 20 is shown; Figure 11 shows a side view of the electrical connection assembly shown in Figure 2.

As shown in Figures 1 to 11, in the illustrated embodiment, the electrical connection assembly also includes a pair of connection terminals 20. The connection terminal 20 includes a first part 21. The first parts 21 of the pair of connection terminals 20 are respectively connected to two surfaces facing each other of the connection ends 111 of the pair of flat conductor cores 11. The pair of connection terminals 20 is separated from each other in the width direction X.

As shown in Figures 1 to 11, in the illustrated embodiment, the connection ends 111 of the pair of flat conductor cores 11 are separated from each other by a first spacing D1 in the width direction X, and at least a part of the first parts 21 of the pair of connection terminals 20 are separated by a spacing equal to the first spacing D1 in the width direction X.

As shown in Figures 1 to 11, in the illustrated embodiment, the first part 21 of the connection terminal 20 is also connected to the surface of the connection base 112 of the flat conductor core 11 to increase the electrical connection area between the connection terminal 20 and the electrical connection part 110 of the flat conductor core 11.

As shown in Figures 1 to 11, in the illustrated embodiment, the connection ends 111 of the pair of flat conductor cores 11 are separated from each other by a second spacing D2 in the thickness direction Z, and the second spacing D2 is greater than the thickness of the connection terminal 20. Therefore, as shown in Figure 9 and Figure 10, in the illustrated embodiment, the first part 21 of one connection terminal 20 electrically connected to one flat conductor core 11 is separated from the other flat conductor core 11 by a predetermined spacing D in the thickness direction Z, which is equal to the difference between the second spacing D2 and the thickness of the connection terminal 20.

As shown in Figures 1 to 11, in the illustrated embodiment, the first part 21 of the connection terminal 20 can be welded to the electrical connection part 110 of the flat conductor core 11, for example, it can be welded to the electrical connection part 110 of the flat conductor core 11 by ultrasonic wave. However, please note that the present invention is not limited to the illustrated embodiments. For example, the first part 21 of the connection terminal 20 can be riveted, crimped or other suitable ways to be electrically connected to the electrical connection part 110 of the flat conductor core 11.

As shown in Figures 1 to 11, in the illustrated embodiment, the connection terminal 20 also includes a second part 22 extending beyond the electrical connection part 110 of the flat conductor core 11 along the length direction of the flat conductor 10, and the second part 22 of the connection terminal 20 is used for electrical connection with a mating connection terminal (not shown).

As shown in Figures 1 to 11, in the illustrated embodiment, the electrical connection assembly also includes a pair of connection barrels 30. The pair of connection barrels 30 is respectively connected to the second parts 22 of the pair of connection terminals 20 for electrical connection with two mating connection terminals.

As shown in Figures 1 to 11, in the illustrated embodiment, a riveting hole 221 is formed on the second part 22 of the connection terminal 20. The connection barrel 30 includes a riveting part 31 riveted to the riveting hole 221 and a convex part 32 protruding from the riveting hole 221. The top surface 32a of the convex part 32 of the connection barrel 30 is used for electrical contact with the mating connection terminal.

As shown in Figures 1 to 11, in the illustrated embodiment, the second part 22 of the connection terminal 20 is offset to one side of the thickness direction Z of the first part 21, and the second parts 22 of the pair of connection terminals 20 are offset close to each other, so that the second parts 22 of the pair of connection terminals 20 is flush with each other in the thickness direction Z. that is, the second part 22 of the connection terminal 20 has two opposite surfaces in the thickness direction Z, the two surfaces of the second part 22 of one connection terminal 20 are flush with the two surfaces of the second part 22 of the other connection terminal 20.

As shown in Figures 1 to 11, in the illustrated embodiment, the second part 22 of the connection terminal 20 has a first surface 20a and a second surface 20b opposite in the thickness direction Z. One connection barrel 30 is riveted to the first surface 20a of the second part 22 of one connection terminal 20, and the other connection barrel 30 is riveted to the second surface 20b of the second part 22 of the other connection terminal 20.

As shown in Figures 1 to 11, in the illustrated embodiment, the pair of flat conductors 10 are identical to each other and can be interchangeable with each other. The pair of connection terminals 20 are identical to each other and can be interchangeable with each other. The pair of connection barrels 30 are identical to each other and can be interchangeable with each other. In this way, the manufacturing cost can be reduced.

As shown in Figures 1 to 11, in the illustrated embodiment, the second parts 22 of the pair of connection terminals 20 are flush with each other in the thickness direction Z. That is to say, the two opposite surfaces of one connection terminal 20 in the thickness direction Z are flush with the two opposite surfaces of the other connection terminal 20 and are perpendicular to the thickness direction Z.

As shown in Figures 1 to 11, in the illustrated embodiment, the top surfaces 32a of the convex parts 32 of the pair of connection barrels 30 are located in the same plane perpendicular to the thickness direction Z.

As shown in Figures 1 to 11, in the illustrated embodiment, the connection terminal 20 and the connection barrel 30 are made of copper to improve the conductivity of the connection terminal 20 and the connection barrel 30. The flat conductor core 11 is made of aluminum to reduce the manufacturing cost.

Although not shown, in an exemplary embodiment of the present invention, the aforementioned connection barrel 30 can be integrally formed on the second part 22 of the connection terminal 20.

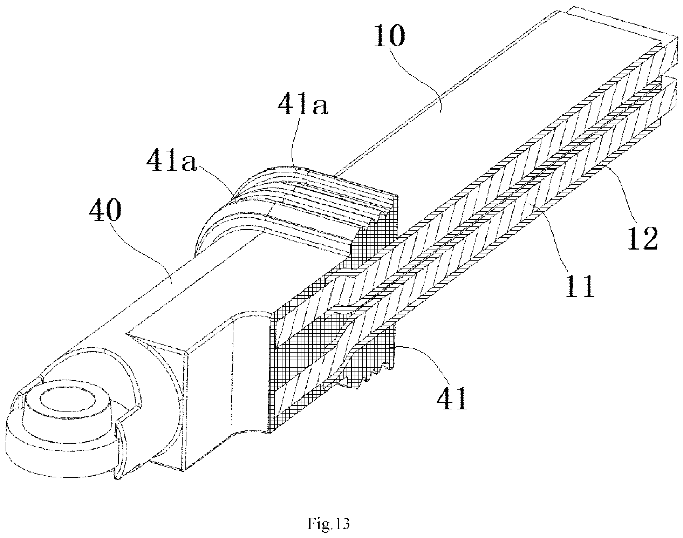

Figure 12 shows an illustrative perspective view of an electrical connection assembly for a connector according to another exemplary embodiment of the present invention; Figure 13 shows a longitudinal sectional view of the electrical connection assembly shown in Figure 12.

As shown in Figures 1 to 13, in the illustrated embodiment, the electrical connection assembly also includes an insulation cladding layer 40. The cladding layer 40 is hermetically cladded on the electrical connection part 110 of the flat conductor core 11 and the first part 21 of the connection terminal 20. A part 41 of the cladding layer 40 is cladded on the insulation layers 12 of the pair of flat conductors 10, and the connection barrel 30 is located outside the cladding layer 40.

As shown in Figures 1 to 13, in the illustrated embodiment, the connection between the electrical connection part 110 and the connection terminal 20 is sealed in the cladding layer 40. In this way, the connection between the electrical connection part 110 and the connection terminal 20 can be isolated from the external environment. Therefore, the connection between the electrical connection part 110 and the connection terminal 20 can be prevented from contacting with water vapor, thereby preventing electrochemical corrosion of the connection between the electrical connection part 110 and the connection terminal 20, and improving the service life of the electrical connection assembly.

As shown in Figures 1 to 13, in the illustrated embodiment, the cladding layer 40 is made of elastic material, for example, the cladding layer 40 can be made of silica gel or any other suitable thermosetting material. The cladding layer 40 can be an integral injection molding part formed by inserting injection molding.

As shown in Figures 1 to 13, in the illustrated embodiment, a sealing structure 41a suitable for matching with an inner wall of a connector housing (not shown) is formed on the outer surface of the part 41 of the cladding layer 40, and the sealing structure 41a is used to seal the gap between the insulation layers 12 of the pair of flat conductors 10 and the inner wall of the connector housing.

As shown in Figures 1 to 13, in the illustrated embodiment, the sealing structure 41a of the cladding layer 40 includes a plurality of annular ribs 41a formed on the outer surface of the part 41 of the cladding layer 40, and the plurality of annular ribs 41a are separated from each other in the length direction of the flat conductor 10.

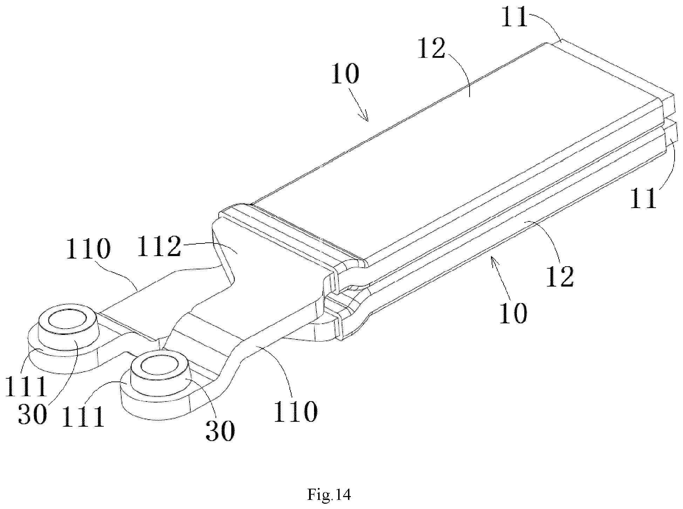

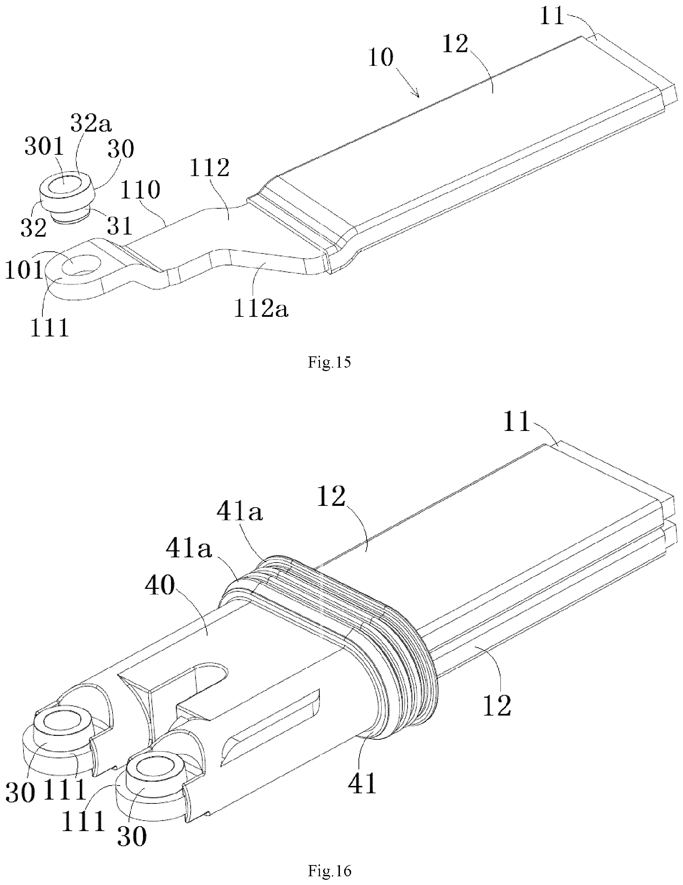

Figure 14 shows an illustrative perspective view of an electrical connection assembly for a connector according to another exemplary embodiment of the present invention; Figure 15 shows an illustrative exploded view of a flat conductor 10 and a connection barrel 30 of the electrical connection assembly shown in Figure 14.

The main difference between the embodiments shown in Figures 14 and 15 and those shown in Figures 1 to 13 is that the connection terminal 20 is removed.

As shown in Figure 14 and Figure 15, in the illustrated embodiment, a pair of connection barrels 30 are riveted to the connection ends 111 of the pair of flat conductor cores 11 respectively for electrical connection with two mating connection terminals.

As shown in Figures 14 and 15, in the illustrated embodiment, a riveting hole 101 is formed on the connection end 111 of the flat conductor core 11. The connection barrel 30 includes a riveting part 31 riveted to the riveting hole 101 and a convex part 32 protruding from the riveting hole 101. The top surface 32a of the convex part 32 (see Fig. 6) is used for electrical contact with the mating connection terminal.

As shown in Figure 14 and Figure 15, in the illustrated embodiment, the connection end 111 of the flat conductor core 11 is offset to one side of the thickness direction Z of the connection base 112, and the connection ends 111 of the pair of flat conductor cores 11 are offset close to each other, so that the connection ends 111 of the pair of flat conductor cores 11 are flush with each other in the thickness direction Z.

As shown in Figures 14 and 15, in the illustrated embodiment, the connection end 111 has a first surface and a second surface opposite in the thickness direction Z. One connection barrel 30 in the pair of connection barrels 30 is riveted to the first surface of one connection end 111, and the other connection barrel 30 is riveted to the second surface of the other connection end 111.

As shown in Figures 14 and 15, in the illustrated embodiment, the pair of flat conductors 10 are identical to each other and can be interchangeable with each other. The pair of connection barrels 30 are identical to each other and can be interchangeable with each other. In this way, the manufacturing cost can be reduced.

As shown in Figures 14 and 15, in the illustrated embodiment, the connection ends 111 of the pair of flat conductor cores 11 are flush with each other in the thickness direction Z. That is to say, the two opposite surfaces of one connection end 111 in the thickness direction Z are flush with the two opposite surfaces of the other connection end 111 and are perpendicular to the thickness direction Z. The top surfaces 32a of the convex parts 32 of the pair of connection barrels 30 are located in the same plane perpendicular to the thickness direction Z.

As shown in Figures 14 and 15, in the illustrated embodiment, the connection barrel 30 is made of copper to improve the conductivity. The flat conductor core 11 is made of aluminum to reduce the manufacturing cost.

Figure 16 shows a cladding layer 40 formed on one end of the flat conductor 10 of the electrical connection assembly shown in Figure 14.

As shown in Figures 14 to 16, in the illustrated embodiment, the electrical connection assembly also includes a cladding layer 40, which is sealed on the connection base 112 of the electrical connection part 110 and a part of the connection end 111 of the electrical connection part 110. A part 41 of the cladding layer 40 is cladded on the insulation layers 12 of the pair of flat conductors 10, and the connection barrel 30 is located outside the cladding layer 40.

As shown in Figures 14 to 16, in the illustrated embodiment, the cladding layer 40 is made of elastic materials, for example, the cladding layer 40 can be made of silica gel or any other suitable thermosetting material. The cladding layer 40 can be an integral injection molding part formed by inserting injection molding.

As shown in Figures 14 to 16, in the illustrated embodiment, a sealing structure 41a suitable for matching with an inner wall of a connector housing is formed on the outer surface of the part 41 of the cladding 40. The sealing structure 41a is used to seal the gap between the insulation layers 12 of the pair of flat conductors 10 and the inner wall of the connector housing.

As shown in Figures 14 to 16, in the illustrated embodiment, the sealing structure 41a comprises a plurality of annular ribs 41a formed on the outer surface of the part 41 of the cladding layer 40, and the plurality of annular ribs 41a are spaced from each other in the length direction of the flat conductor 10.

As shown in Figures 1 to 16, in an exemplary embodiment of the present invention, a connector is also disclosed. The connector comprises a housing and the aforementioned electrical connection assembly. The electrical connection assembly is installed in the housing.

As shown in Figures 1 to 16, in another exemplary embodiment of the present invention, an electrical connection component 10 for a connector is also disclosed. The electrical connection component 10 includes: a flat conductor core 11; and an insulation layer 12 cladded on the flat conductor core 11. The flat conductor core 11 has a body 120 and an electrical connection part 110 exposed from one end of the insulation layer 12. The electrical connection part 110 includes a connection base 112 and a connection end 111. The connection base 112 is connected between the connection end 111 and the body 120 of the flat conductor core 11, and the connection end 111 is offset to one side of the width direction X of the body 120 of the flat conductor core 11.

As shown in Figures 1 to 16, in an exemplary embodiment of the present invention, the aforementioned flat conductor core 10 can be a bus bar.

As shown in Figures 1 to 16, in an exemplary embodiment of the present invention, the aforementioned flat conductor core 10 can be a profiled part, for example, a stamping part.

As shown in Figures 1 to 16, in an exemplary embodiment of the present invention, the aforementioned electrical connection component 10 can be a flat wire.

## Claims

1. An electrical connection assembly for a connector, wherein the electrical connection assembly comprising:
a pair of flat conductors (10) which are arranged to overlap each other in the thickness direction (Z) thereof, wherein the flat conductor (10) comprises a flat conductor core (11) and an insulation layer (12) cladded on the flat conductor core (11), and the flat conductor core (11) has an electrical connection part (110) exposed from one end of the insulation layer (12) for electrical connection;
a pair of connection terminals (20) which are respectively connected to two surfaces facing each other of the electrical connection parts (110) of the pair of flat conductor cores (11); and
a cladding layer (40) which is cladded on the electrical connection part (110) and the connection terminal (20), so that the connection between the electrical connection part (110) and the connection terminal (20) is sealed in the cladding layer (40);
**characterized in that**
the electrical connection part (110) of the flat conductor core (11) comprising:
a connection end (111) which is offset to one side of the width direction (X) of the flat conductor (10); and
a connection base (112) which is connected between the connection end (111) and a body (120) of the flat conductor core (11),
wherein the connection ends (111) of the pair of flat conductor cores (11) of the pair of flat conductors (10) are spaced with a first spacing (D1) in the width direction (X).

2. The electrical connection assembly according to claim 1,
wherein the connection bases (112) of the pair of flat conductor cores (11) of the pair of flat conductors (10) are partially overlapped with each other in the thickness direction (Z);
wherein the connection bases (112) of the pair of flat conductor cores (11) are separated from each other by a second spacing (D2) in the thickness direction (Z).

3. The electrical connection assembly according to claim 2,
wherein the connection base (112) of the flat conductor core (11) is offset to one side of the thickness direction (Z) of the flat conductor (10), and the connection bases (112) of the pair of flat conductor cores (11) are offset away from each other to increase the second spacing (D2).

4. The electrical connection assembly according to claim 2,
wherein the connection base (112) comprises two opposite sides in the width direction (X), and at least part of at least one side (112a) of the connection base (112) extends obliquely with respect to the length direction (Y) of the flat conductor (10), so that the width of at least part of the connection base (112) gradually increases in a direction away from the connection end (111);
wherein the connection end (111) has a first width, the body (120) of the flat conductor core (11) has a second width, and the first width is less than half of the second width;
wherein the width of at least one part of the connection base (112) is changed from the first width to the second width.

5. The electrical connection assembly according to claim 2,
wherein the connection end (111) comprises two opposite sides in the width direction (X), and the two opposite sides of the connection end (111) extend along the length direction (Y) of the flat conductor (10).

6. The electrical connection assembly according to claim 1,
wherein the pair of connection terminals (20) are separated from each other in the width direction (X);
wherein the connection terminal (20) comprises a first part (21) connected to the connection end (111) of the flat conductor core (11), at least a part of the first parts (21) of the pair of connection terminals (20) are separated in the width direction (X) by a distance equal to the first distance (D1);
wherein the first part (21) of the connection terminal (20) is also connected to the surface of the connection base (112) of the flat conductor core (11) to increase the electrical connection area between the connection terminal (20) and the electrical connection part (110) of the flat conductor core (11).

7. The electrical connection assembly according to claim 6,
wherein the connection ends (111) of the pair of flat conductor cores (11) are separated from each other by a second spacing (D2) in the thickness direction (Z), and the second spacing (D2) is greater than the thickness of the connection terminal (20);
wherein the first part (21) of one connection terminal (20) electrically connected to one flat conductor core (11) is separated from the other flat conductor core (11) by a predetermined distance (D) in the thickness direction (Z).

8. The electrical connection assembly according to claim 6,
wherein the connection terminal (20) also includes a second part (22) extending beyond the electrical connection part (110) of the flat conductor core (11), the second part (22) is used for electrical connection with a mating connection terminal;
wherein the electrical connection assembly further comprising:
a pair of connection barrels (30) which are respectively connected to the second parts (22) of the pair of connection terminals (20),
wherein the pair of connection barrels (30) are located outside the cladding layer (40) and are used for electrical connection with two mating connection terminals respectively.

9. The electrical connection assembly according to claim 8,
wherein a riveting hole (221) is formed on the second part (22) of the connection terminal (20), the connection barrel (30) comprises a riveting part (31) riveted to the riveting hole (221) and a convex part (32) protruding from the riveting hole (221), the top surface (32a) of the convex part (32) is used for electrical contact with the mating connection terminal;
wherein the second part (22) of the connection terminal (20) is offset to one side of the thickness direction (Z) of the first part (21), and the second parts (22) of the pair of connection terminals (20) are offset close to each other.

10. The electrical connection assembly according to claim 9,
wherein the second part (22) of the connection terminal (20) has a first surface (20a) and a second surface (20b) opposite to each other in the thickness direction (Z);
wherein one of the pair of connection barrels (30) is riveted to the first surface (20a) of the second part (22) of one connection terminal (20), and the other is riveted to the second surface (20b) of the second part (22) of the other connection terminal (20);
wherein the second part (22) of the connection terminal (20) has two opposite surfaces in the thickness direction (Z), the two surfaces of the second part of one connection terminal (20) are flush with the two surfaces of the second part of the other connection terminal (20); and
wherein the top surfaces (32a) of the convex parts (32) of the pair of connection barrels (30) are located in the same plane perpendicular to the thickness direction (Z).

11. The electrical connection assembly according to claim 8,
wherein the connection terminal (20) and the connection barrel (30) are made of copper, and the flat conductor core (11) is made of aluminum.

12. The electrical connection assembly according to claim 1,
wherein the cladding layer (40) is made of elastic material, and a part (41) of the cladding layer (40) is cladded on the insulation layer (12) of the pair of flat conductors (10);
wherein a sealing structure (41a) suitable for matching with an inner wall of a connector housing is formed on the outer surface of the part (41) of the cladding layer (40), the sealing structure (41a) is used to seal a gap between the insulation layers (12) of the pair of flat conductors (10) and the inner wall of the connector housing;
wherein the sealing structure (41a) comprises a plurality of annular ribs (41a) formed on the outer surface of the part (41) of the cladding layer (40), and the plurality of annular ribs (41a) are separated from each other in the length direction of the flat conductor (10).

13. The electrical connection assembly according to claim 12,
wherein the cladding layer (40) is an integrated injection molding part formed on the electrical connection part (110) and the connection terminal (20) by inserting injection molding.

14. A connector, comprising:
a housing; and
the electrical connection assembly according to any one of claims 1-13, which is installed in the housing.

## Patentansprüche

1. Eine elektrische Verbindungsanordnung für einen Verbinder, wobei die elektrische Verbindungsanordnung umfasst:
ein Paar Flachleiter (10), die so angeordnet sind, dass sie sich in ihrer Dickenrichtung (Z) überlappen, wobei der Flachleiter (10) einen Flachleiterkern (11) und eine auf den Flachleiterkern (11) aufgebrachte Isolierschicht (12) umfasst, und der Flachleiterkern (11) ein elektrisches Verbindungsstück (110) aufweist, das an einem Ende der Isolierschicht (12) für eine elektrische Verbindung freiliegt;
ein Paar von Verbindungsanschlüssen (20), die jeweils mit zwei einander zugewandten Oberflächen der elektrischen Verbindungsstücke (110) des Paares von Flachleiterkernen (11) verbunden sind; und
eine Ummantelungsschicht (40), die auf das elektrische Verbindungsstück (110) und den Anschluss (20) aufgebracht ist, so dass die Verbindung zwischen dem elektrischen Verbindungsstück (110) und dem Anschluss (20) in der Ummantelungsschicht (40) abgedichtet ist;
**dadurch gekennzeichnet, dass**
das elektrische Verbindungsstück (110) des Flachleiterkerns (11) umfasst:
ein Verbindungsende (111), das zu einer Seite der Breitenrichtung (X) des Flachleiters (10) versetzt ist; und
eine Verbindungsbasis (112), die zwischen dem Verbindungsende (111) und einem Körper (120) des Flachleiterkerns (11) verbunden ist,
wobei die Verbindungsenden (111) des Paares von Flachleiterkernen (11) des Paares von Flachleitern (10) in der Breitenrichtung (X) mit einem ersten Abstand (D1) voneinander beabstandet sind.

2. Die elektrische Verbindungsanordnung nach Anspruch 1,
wobei die Verbindungsbasen (112) des Paares von Flachleiterkernen (11) des Paares von Flachleitern (10) in Dickenrichtung (Z) teilweise miteinander überlappen;
wobei die Anschlussbasen (112) des Paares Flachleiterkerne (11) in Dickenrichtung (Z) durch einen zweiten Abstand (D2) voneinander getrennt sind.

3. Die elektrische Verbindungsanordnung nach Anspruch 2,
wobei die Verbindungsbasis (112) des Flachleiterkerns (11) zu einer Seite der Dickenrichtung (Z) des Flachleiters (10) versetzt ist und die Verbindungsbasen (112) des Paares von Flachleiterkernen (11) voneinander weg versetzt sind, um den zweiten Abstand (D2) zu vergrößern.

4. Die elektrische Verbindungsanordnung nach Anspruch 2,
wobei die Verbindungsbasis (112) zwei gegenüberliegende Seiten in der Breitenrichtung (X) umfasst und sich zumindest ein Teil zumindest einer Seite (112a) der Verbindungsbasis (112) schräg zur Längsrichtung (Y) des Flachleiters (10) erstreckt, sodass die Breite zumindest eines Teils der Anschlussbasis (112) in einer Richtung weg vom Verbindungsende (111) allmählich zunimmt;
wobei das Verbindungsende (111) eine erste Breite aufweist, der Körper (120) des Flachleiterkerns (11) eine zweite Breite aufweist und die erste Breite weniger als die Hälfte der zweiten Breite beträgt;
wobei die Breite mindestens eines Teils der Verbindungsbasis (112) von der ersten Breite auf die zweite Breite geändert wird.

5. Die elektrische Verbindungsanordnung nach Anspruch 2,
wobei das Verbindungsende (111) zwei gegenüberliegende Seiten in der Breitenrichtung (X) umfasst und sich die beiden gegenüberliegenden Seiten des Verbindungsendes (111) entlang der Längsrichtung (Y) des Flachleiters (10) erstrecken.

6. Die elektrische Verbindungsanordnung nach Anspruch 1,
wobei das Paar von Verbindungsanschlüssen (20) in Breitenrichtung (X) voneinander getrennt ist;
wobei der Verbindungsanschluss (20) einen ersten Abschnitt (21) umfasst, der mit dem Verbindungsende (111) des Flachleiterkerns (11) verbunden ist, wobei zumindest ein Teil der ersten Abschnitte (21) des Paares von Verbindungsanschlüssen (20) in Breitenrichtung (X) um einen Abstand voneinander getrennt ist, der dem ersten Abstand (D1) entspricht;
wobei der erste Abschnitt (21) des Verbindungsanschlusses (20) ebenfalls mit der Oberfläche der Anschlussbasis (112) des Flachleiterkerns (11) verbunden ist, um die elektrische Verbindungsfläche zwischen dem Verbindungsanschluss (20) und dem elektrischen Verbindungsstück (110) des Flachleiterkerns (11) zu vergrößern.

7. Die elektrische Verbindungsanordnung nach Anspruch 6,
wobei die Verbindungsenden (111) des Paares von Flachleiterkernen (11) in Dickenrichtung (Z) durch einen zweiten Abstand (D2) voneinander getrennt sind und der zweite Abstand (D2) größer ist als die Dicke des Verbindungsanschlusses (20);
wobei der erste Abschnitt (21) eines Verbindungsanschlusses (20), der elektrisch mit einem Flachleiterkern (11) verbunden ist, durch einen vorbestimmten Abstand (D) in Dickenrichtung (Z) von dem anderen Flachleiterkern (11) getrennt ist.

8. Die elektrische Verbindungsanordnung nach Anspruch 6,
wobei der Verbindungsanschluss (20) zudem einen zweiten Abschnitt (22) umfasst, der sich über das elektrische Verbindungsstück (110) des Flachleiterkerns (11) hinaus erstreckt, wobei der zweite Abschnitt (22) zur elektrischen Verbindung mit einem Gegenanschluss dient;
wobei die elektrische Verbindungsanordnung ferner umfasst:
ein Paar von Verbindungstöpfen (30), die jeweils mit den zweiten Abschnitten (22) des Paares von Verbindungsanschlüssen (20) verbunden sind,
wobei sich das Paar von Verbindungstöpfen (30) außerhalb der Ummantelungsschicht (40) befindet und jeweils zur elektrischen Verbindung mit zwei Gegenanschlüssen dient.

9. Die elektrische Verbindungsanordnung nach Anspruch 8,
wobei an dem zweiten Abschnitt (22) des Verbindungsanschlusses (20) ein Nietloch (221) ausgebildet ist, der Verbindungstopf (30) einen an das Nietloch (221) genieteten Nietabschnitt (31) und einen aus dem Nietloch (221) hervorstehenden konvexen Abschnitt (32) umfasst, wobei die Oberfläche (32a) des konvexen Abschnitts (32) für den elektrischen Kontakt mit dem Gegenanschluss verwendet wird;
wobei der zweite Abschnitt (22) des Verbindungsanschlusses (20) zu einer Seite der Dickenrichtung (Z) des ersten Abschnitts (21) versetzt ist und die zweiten Abschnitte (22) des Paares von Verbindungsanschlüssen (20) nahe beieinander versetzt sind.

10. Die elektrische Verbindungsanordnung nach Anspruch 9,
wobei der zweite Abschnitt (22) des Verbindungsanschlusses (20) eine erste Fläche (20a) und eine zweite Fläche (20b) aufweist, die in Dickenrichtung (Z) einander gegenüberliegen;
wobei einer der beiden Verbindungstöpfe (30) an die erste Fläche (20a) des zweiten Abschnitts (22) eines Verbindungsanschlusses (20) und der andere an die zweite Fläche (20b) des zweiten Abschnitts (22) des anderen Verbindungsanschlusses (20) genietet ist;
wobei der zweite Abschnitt (22) des Verbindungsanschlusses (20) zwei in Dickenrichtung (Z) gegenüberliegende Flächen aufweist, wobei die beiden Flächen des zweiten Abschnitts des einen Verbindungsanschlusses (20) bündig mit den beiden Flächen des zweiten Abschnitts des anderen Verbindungsanschlusses (20) sind; und
wobei die Oberflächen (32a) der konvexen Abschnitte (32) des Paares von Verbindungstöpfen (30) in derselben Ebene senkrecht zur Dickenrichtung (Z) liegen.

11. Die elektrische Verbindungsanordnung nach Anspruch 8,
wobei der Verbindungsanschluss (20) und der Verbindungstopf (30) aus Kupfer bestehen und der Flachleiterkern (11) aus Aluminium besteht.

12. Die elektrische Verbindungsanordnung nach Anspruch 1,
wobei die Ummantelungsschicht (40) aus elastischem Material besteht und ein Teil (41) der Ummantelungsschicht (40) auf die Isolierschicht (12) des Paares von Flachleitern (10) aufgebracht ist;
wobei an der Außenfläche des Teils (41) der Ummantelungsschicht (40) eine Dichtungsstruktur (41a) ausgebildet ist, die zur Anpassung an eine Innenwand eines Verbindergehäuses geeignet ist, wobei die Dichtungsstruktur (41a) dazu dient, eine Lücke zwischen den Isolierschichten (12) des Paares von Flachleitern (10) und der Innenwand des Verbindergehäuses abzudichten;
wobei die Dichtungsstruktur (41a) eine Vielzahl von ringförmigen Rippen (41a) umfasst, die an der Außenfläche des Teils (41) der Ummantelungsschicht (40) ausgebildet sind, und die Vielzahl von ringförmigen Rippen (41a) in Längsrichtung des Flachleiters (10) voneinander beabstandet ist.

13. Die elektrische Verbindungsanordnung nach Anspruch 12,
wobei die Ummantelungsschicht (40) ein integrales Spritzgussteil ist, das durch Einsatz-Spritzgießen auf dem Verbindungsstück (110) und dem Verbindungsanschluss (20) ausgebildet ist.

14. Ein Verbinder, umfassend:
ein Gehäuse; und
die elektrische Verbindungsanordnung nach einem der Ansprüche 1 bis 13, die in dem Gehäuse untergebracht ist.

## Revendications

1. Assemblage de connexion électrique pour un connecteur, dans lequel l'assemblage de connexion électrique comprend :
une paire de conducteurs plats (10) qui sont disposés pour se chevaucher l'un l'autre dans la direction d'épaisseur (Z) de ceux-ci, dans lequel le conducteur plat (10) comprend un noyau de conducteur plat (11) et une couche isolante (12) recouvrant le noyau de conducteur plat (11), et le noyau de conducteur plat (11) présente une partie de connexion électrique (110) exposée à partir d'une extrémité de la couche isolante (12) pour une connexion électrique ;
une paire de bornes de raccordement (20) qui sont respectivement connectées à deux surfaces orientées l'une vers l'autre des parties de connexion électrique (110) de la paire de noyaux de conducteur plat (11) ; et
une couche recouvrante (40) qui recouvre la partie de connexion électrique (110) et la borne de raccordement (20), de sorte que la connexion entre la partie de connexion électrique (110) et la borne de raccordement (20) soit scellée dans la couche recouvrante (40) ;
**caractérisé en ce que**
la partie de connexion électrique (110) du noyau de conducteur plat (11) comprenant :
une extrémité de connexion (111) qui est décalée vers un côté donné de la direction de largeur (X) du conducteur plat (10) ; et
une base de connexion (112) qui est connectée entre l'extrémité de connexion (111) et un corps (120) du noyau de conducteur plat (11),
dans lequel les extrémités de connexion (111) de la paire de noyaux de conducteur plat (11) de la paire de conducteurs plats (10) sont espacés d'un premier espacement (D1) dans la direction de largeur (X).

2. L'assemblage de connexion électrique selon la revendication 1,
dans lequel les bases de connexion (112) de la paire de noyaux de conducteur plat (11) de la paire de conducteurs plats (10) se chevauchent partiellement l'une l'autre dans la direction d'épaisseur (Z) ;
dans lequel les bases de connexion (112) de la paire de noyaux de conducteur plat (11) sont séparées l'une de l'autre par un deuxième espacement (D2) dans la direction d'épaisseur (Z).

3. L'assemblage de connexion électrique selon la revendication 2,
dans lequel la base de connexion (112) du noyau de conducteur plat (11) est décalée vers un côté donné de la direction d'épaisseur (Z) du conducteur plat (10), et les bases de connexion (112) de la paire de noyaux de conducteur plat (11) sont décalées en s'éloignant l'une de l'autre pour accroître le deuxième espacement (D2).

4. L'assemblage de connexion électrique selon la revendication 2,
dans lequel la base de connexion (112) comprend deux côtés opposés dans la direction de largeur (X), et au moins une partie d'au moins un côté (112a) de la base de connexion (112) s'étend obliquement par rapport à la direction de longueur (Y)à du conducteur plat (10), de sorte que la largeur d'au moins une partie de la base de connexion (112) augmente graduellement dans une direction s'éloignant de l'extrémité de connexion (111) ;
dans lequel l'extrémité de connexion (111) présente une première largeur, le corps (120) du noyau de conducteur plat (11) présente une deuxième largeur, et la première largeur est inférieure à une moitié de la deuxième largeur ;
dans lequel la largeur d'au moins une partie de la base de connexion (112) est changée de la première largeur en la deuxième largeur.

5. L'assemblage de connexion électrique selon la revendication 2,
dans lequel l'extrémité de connexion (111) comprend deux côtés opposés dans la direction de largeur (X), et les deux côtés opposés de l'extrémité de connexion (111) s'étendent le long de la direction de longueur (Y) du conducteur plat (10).

6. L'assemblage de connexion électrique selon la revendication 1,
dans lequel la paire de bornes de raccordement (20) sont séparées l'une de l'autre dans la direction de largeur (X) ;
dans lequel la borne de raccordement (20) comprend une première partie (21) connectée à l'extrémité de connexion (111) du noyau de conducteur plat (11), au moins une partie des premières parties (21) de la paire de bornes de raccordement (20) sont séparées dans la direction de largeur (X) d'une distance égale à la première distance (D1) ;
dans lequel la première partie (21) de la borne de raccordement (20) est également connectée à la surface de la base de connexion (112) du noyau de conducteur plat (11) pour augmenter l'aire de connexion électrique entre la borne de raccordement (20) et la partie de connexion électrique (110) du noyau de conducteur plat (11).

7. L'assemblage de connexion électrique selon la revendication 6,
dans lequel les extrémités de connexion (111) de la paire de noyaux de conducteur plat (11) sont séparées l'une de l'autre par un deuxième espacement (D2) dans la direction d'épaisseur (Z), et le deuxième espacement (D2) est supérieur à l'épaisseur de la borne de raccordement (20) ;
dans lequel la première partie (21) d'une borne de raccordement donnée (20) électriquement connectée à un noyau de conducteur plat donné (11) est séparée de l'autre noyau de conducteur plat (11) par une distance prédéterminée (D) dans la direction d'épaisseur (Z).

8. L'assemblage de connexion électrique selon la revendication 6,
dans lequel la borne de raccordement (20) inclut également une deuxième partie (22) s'étendant au-delà de la partie de connexion électrique (110) du noyau de conducteur plat (11), la deuxième partie (22) est utilisée pour une connexion électrique avec une borne de raccordement homologue ;
dans lequel, l'assemblage de connexion électrique comprend en outre :
une paire de cylindres de raccordement (30) qui sont respectivement connectés aux deuxièmes parties (22) de la paire de bornes de raccordement (20),
dans lequel la paire de cylindres de raccordement (30) sont localisés à l'extérieur de la couche recouvrante (40) et sont utilisés pour une connexion électrique avec deux bornes de raccordement homologues respectivement.

9. L'assemblage de connexion électrique selon la revendication 8,
dans lequel un trou de rivetage (221) est constitué sur la deuxième partie (22) de la borne de raccordement (20), le cylindre de raccordement (30) comprend une partie de rivetage (31) rivetée au trou de rivetage (221) et une partie convexe (32) débordant depuis le trou de rivetage (221), la surface de dessus (32a) de la partie convexe (32) est utilisée pour un contact électrique avec la borne de raccordement homologue ;
dans lequel la deuxième partie (22) de la borne de raccordement (20) est décalée vers un côté donné de la direction d'épaisseur (Z) de la première partie (21), et les deuxièmes parties (22) de la paire de bornes de raccordement (20) sont décalées proches l'une de l'autre.

10. L'assemblage de connexion électrique selon la revendication 9,
dans lequel la deuxième partie (22) de la borne de raccordement (20) présente une première surface (20a) et une deuxième surface (20b) opposées l'une à l'autre dans la direction d'épaisseur (Z) ;
dans lequel un donné de la paire de cylindres de raccordement (30) est riveté à la première surface (20a) de la deuxième partie (22) d'une borne de raccordement donnée (20), et l'autre est riveté à la deuxième surface (20b) de la deuxième partie (22) de l'autre borne de raccordement (20) ;
dans lequel la deuxième partie (22) de la borne de raccordement (20) présente deux surfaces opposées dans la direction d'épaisseur (Z), les deux surfaces de la deuxième partie d'une borne de raccordement donnée (20) affleurent les deux surfaces de la deuxième partie de l'autre borne de raccordement (20) ; et
dans lequel les surfaces de dessus (32a) des parties convexes (32) de la paire de cylindres de raccordement (30) sont localisées dans le même plan perpendiculaire à la direction d'épaisseur (Z).

11. L'assemblage de connexion électrique selon la revendication 8,
dans lequel la borne de raccordement (20) et le cylindre de raccordement (30) sont faits de cuivre, et le noyau de conducteur plat (11) est fait d'aluminium.

12. L'assemblage de connexion électrique selon la revendication 1,
dans lequel la couche recouvrante (40) est faite de matériau élastique, et une partie (41) de la couche recouvrante (40) recouvre la couche isolante (12) de la paire de conducteurs plats (10) ;
dans lequel une structure d'étanchéification (41a) adaptée pour correspondre à une paroi interne d'un boîtier de connecteur est constituée sur la surface externe de la partie (41) de la couche recouvrante (40), la structure d'étanchéification (41a) est utilisée pour étanchéifier un écart entre les couches isolantes (12) de la paire de conducteurs plats (10) et la paroi interne du boîtier de connecteur ;
dans lequel la structure d'étanchéification (41a) comprend une pluralité de nervures annulaires (41a) constituées sur la surface externe de la partie (41) de la couche recouvrante (40), et la pluralité de nervures annulaires (41a) sont séparées l'une de l'autre dans la direction de longueur du conducteur plat (10).

13. L'assemblage de connexion électrique selon la revendication 12,
dans lequel la couche recouvrante (40) est une partie intégrée par moulage par injection constituée sur la partie de connexion électrique (110) et la borne de raccordement (20) en insérant un moulage par injection.

14. Connecteur, comprenant :
un boîtier ; et
l'assemblage de connexion électrique selon l'une quelconque des revendications 1 à 13, qui est installé dans le boîtier.
